# EUROPÄISCHE PATENTSCHRIFT

(11) **EP 1 393 882 B1**
(45) Veröffentlichungstag und Bekanntmachung des Hinweises auf die Patenterteilung: **23.03.2005**
(21) Anmeldenummer: 03017388.4
(22) Anmeldetag: 31.07.2003
(51) Int. Cl.: B29C 65/02, B29C 65/16, B29C 65/14, B29C 65/10, B29C 65/40

(54) **Führungseinrichtung**
Guiding apparatus
Appareil de guidage

(30) Priorität: 30.08.2002 DE 20213641 U; 25.09.2002 DE 20214894 U
(43) Veröffentlichungstag der Anmeldung: 03.03.2004
(73) Patentinhaber: Plasticon Germany GmbH, 46539 Dinslaken (DE)
(72) Erfinder: van Laak, Hermann, Dipl.-Ing., 46569 Hünxe (DE)
(74) Vertreter: Menges, Rolf, Dipl.-Ing.

(56) Entgegenhaltungen:
- DE-B- 1 082 041

## Beschreibung

Die Erfindung betrifft eine Führungseinrichtung für einen Schweißroboter, insbesondere zum Verschweißen einer an vorhandenen Befestigungspunkten eines Behälters vorgehängten Innenverkleidung aus Kunststofffolien, bestehend aus einem festlegbaren Führungsgestell mit zumindest einer Führung, wobei der Schweißroboter entlang des Führungsgestells verfahrbar ausgebildet ist.

Schweißroboter werden überall dort eingesetzt, wo sehr viele und lange Schweißnähte erforderlich sind und ggf. in Arbeitshöhen gearbeitet werden muss, die zusätzliche Sicherungsmaßnahmen erfordern. Durch einen Schweißroboter können diese Schweißnähte unterbrechungsfrei mit gleichbleibendem Anpressdruck ausgeführt werden. Es bietet sich daher an, derartige lange Schweißnähte durch einen Schweißroboter auszuführen, der entlang eines Führungsgestells innerhalb einer Führung gelagert ist und über einen elektronisch gesteuerten Antrieb mit einer gleichmäßigen Antriebsgeschwindigkeit in Längsrichtung bewegt wird. Derartige Schweißroboter haben sich beispielsweise beim Einsatz von senkrechten und waagerechten Stumpf- und Kehlnähten für Stahlbauten bereits bewährt. Hierzu wird das Führungsgestell über Saugnäpfe oder Magneten an der zu bearbeitenden Fläche befestigt, sodass der Schweißroboter über eine längere Wegstrecke eine qualitativ hochwertige Schweißnaht herstellen kann. Die Schweißroboter werden beispielsweise zur Verschweißung von Blechen, Behältern oder dergleichen überall dort eingesetzt werden, wo verschweißbare Werkstoffe miteinander verbunden werden müssen.

Darüber hinaus besteht die Möglichkeit auch Kunststoffbahnen miteinander zu verschweißen, die beispielsweise nur in vorgegebenen Bahnenbreiten geliefert und nicht vollflächig aufgeklebt werden können und somit innerhalb eines Gehäuses ais innenauskieidung zusätzlich dicht verschweißt werden müssen. Dies ist beispielsweise dort erforderlich, wo die beaufschlagbaren Kanäle oder Gehäuse, mit korrosiven Gasen oder flüssigen Substanzen in Berührung kommen. Des weiteren werden Innenverkleidungen dort eingesetzt, wo infolge von großen Temperaturschwankungen eine Schockwirkung durch Abkühlen der Außenmaterialien entstehen kann und Risse oder Undichtigkeiten hervorgerufen werden. Zum Wärme- und Korrosionsschutz der Wände, die sehr häufig Strömungsbereiche mit Querschnitten von 100 m² und mehr aufweisen, werden die den Strömungsbereichen zugewandten Innenflächen mit Korrosionsschutzfolien aus Kunststoff verkleidet. Hierbei gelangt insbesondere der Kunststoff MFA, PFA oder FEP in Folienform zur Anwendung, weil dieser Kunststoff einen ausreichenden Korrosionsschutz bietet und zugleich für eine gute Isolierung gegen Thermoschock verwendet werden kann. Dadurch, dass die Kunststofffolien nur in bestimmten Bahnenbreiten lieferbar sind, besteht die Notwendigkeit, über die vorhandenen Gehäuseabmessungen entlang der Bahnenkanten Schweißnähte zu ziehen, die die benachbarten Folienbahnen dicht miteinander verbinden. Hierbei besteht das Problem, dass die Behälter oder Kanäle vollflächig mit den Kunststoffbahnen ausgekleidet werden müssen und somit eine Befestigung des Führungsgestells für den Schweißroboter erheblich erschwert wird. Dadurch, dass die Folien extrem dünn, vorzugsweise 1,5 bis 2,5 mm stark sind und punktuell an der Wand befestigt sind, besteht keine Möglichkeit mittels Saugnäpfen das Führungsgestell an diesen Folien zu befestigen. Die Befestigungspunkte der Kunststofffolien sind hierbei an der Innenwand des Behälters vorhanden und werden zur Aufhängung benutzt. Üblicherweise existieren pro Quadratmeter nur wenige Befestigungspunkte. Der Einsatz von Magneten kann nur dann vorgesehen werden, wenn die äußeren Wandungen aus einem eisenhaltigen Material bestehen. Sollte der Außenbehälter jedoch aus anderen Materialien gefertigt sein, beispielsweise aus glasfaserverstärktem Kunststoff oder Edelstahl und nur zur Abdichtung eine zusätzliche Innenverkleidung notwendig sein, ist auch diese Befestigungsart durch Magnete ausgeschlossen. Darüber hinaus besteht das Problem, dass auf Grund der großvolumigen Dimensionierung der Kanäle oder Behälter das Führungsgestell mehrere Meter lang ist und somit unter großer Kraftanstrengung und mit weiteren Hilfsmitteln transportiert werden muss. Der Aufwand zur Montage eines Führungsgestells, zum Versetzen bzw. zur späteren Demontage ist daher mit enormen Kosten verbunden, sodass häufig auf den Einsatz eines Schweißroboters verzichtet wird und stattdessen Handschweißgeräte eingesetzt werden, die von einer Person geführt werden müssen. Diese Handschweißgeräte sind jedoch sehr schwer, sodass eine schnelle Ermüdung der Person eintritt und die Qualität der Schweißnaht hierunter leidet.

Des Weiteren ist zu berücksichtigen, dass beim Verschweißen von perforierten Polymerfolien hochgiftige Dämpfe entstehen und insofern entsprechende Vorkehrungen für den ausführenden Schweißer erforderlich sind. Die Folien lassen sich zudem nur sehr langsam verschweißen, etwa mit einer Geschwindigkeit von 3 cm pro Minute, wobei ein gleichmäßiger Aufpressdruck von ca. 5 Kilogramm erforderlich ist. Daher hat sich gezeigt, dass Handschweißungen in der Regel nicht die Qualitätsstufe erreichen, wie vollautomatische Verschweißungen mit einem Schweißroboter, sodass angestrebt wird längere Schweißnähte in einem Arbeitsgang unterbrechungsfrei zu verschweißen.

DE-A-1,082,041 zeigt eine Führungseinrichtung nach dem Oberbegriff des Anspruches 1.

Der Erfindung liegt daher die Aufgabe zugrunde, eine Vielzahl von einzelnen Schweißvorgängen vollautomatisch durchzuführen und hierzu die Montage beziehungsweise Demontage und die Versetzung eines Schweißroboters zu erleichtern.

Erfindungsgemäß ist zur Lösung der Aufgabe vorgesehen, dass das Führungsgestell mit einer festlegbaren Tragvorrichtung verbunden ist und nach dem Lösen der Befestigung seitlich, quer zur Längsachse des Führungsgestells bewegbar ausgebildet ist. Weitere vorteilhafte Ausgestaltungen ergeben sich durch die Unteransprüche.

Durch eine zusätzliche Tragvorrichtung, welche sich ggf. über die gesamte Wandlänge erstreckt, kann das Führungsgestell aufgehängt und leicht transportiert werden, wobei insbesondere das Führungsgestell seitlich quer zur Längserstreckung des Führungsgestells verschoben werden kann, ohne dass große Kraftanstrengungen notwendig sind. Darüber hinaus wird die Montage des Führungsgestells wesentlich vereinfacht, weil das Führungsgestell an den Verlauf der zu ziehenden Schweißnaht wesentlich besser angepasst werden kann. Hierzu besteht die Möglichkeit, das Führungsgestell beispielsweise bei einer vertikalen Montage zunächst im oberen Bereich zu fixieren und nach Ausrichtung im mittleren und unteren Bereich in der gewünschten Position entlang der zu ziehenden Schweißnaht zu befestigen. Analog kann eine horizontale Montage erfolgen. Somit kann das Führungsgestell optimal an die Kante der Innenverkleidung angepasst werden. Weitere geringfügige Ungenauigkeit oder Toleranzen werden durch den Schweißkopf ausgeglichen. Durch den Einsatz eines Schweißroboters wird hierbei eine qualitativ hochwertige Schweißnaht mit einen gleichbleibenden Anpressdruck erzielt. Die üblicher Weise entstehenden Dämpfe während des vollautomatischen Schweißvorgangs sind für das Bedienungspersonal unkritisch, weil dieses während des Schweißvorgangs nicht anwesend sein muss.

Durch die erfindungsgemäße Führungseinrichtung besteht insbesondere die Möglichkeit das Führungsgestell sowohl horizontal, vertikal oder unter einem Neigungswinkel auszurichten oder abschnittsweise schräg verlaufend anzuordnen, damit die Möglichkeit einer Verschweißung sämtlicher Schweißnähte ermöglicht wird. Zur Handhabung des sich über mehrere Meter erstreckenden Führungsgestelles und wesentlich vereinfachten Montage bzw. Demontage ist vorgesehen, dass das Führungsgestell nach dem Lösen der Tragvorrichtung oder von der Tragvorrichtung über eine Hebeeinrichtung in der jeweiligen Höhe verlagerbar ausgebildet ist.

Die Tragvorrichtung kann in einer ersten Ausführungsform beispielsweise für eine Überkopfschweißung aus einem Gerüstaufbau mit oben liegenden Befestigungsrohren bestehen, auf welche das Führungsgestell abstützend aufliegt und wobei zur ortsfesten Halterung einzelne Verschraubungen, beispielsweise Rohrverschraubungen, vorgesehen sind, die eine sichere Positionierung des Führungsgestells zur Decke gewährleisten. Nach Lösen der Verschraubungen kann das Führungsgestell auf die Befestigungsrohre aufgelegt und seitlich verschoben werden. Des Weiteren besteht die Möglichkeit die Tragvorrichtung seitlich an einem Gerüstaufbau zu befestigen, um horizontale oder vertikal verlaufende Schweißnähte auszuführen. Bei dieser Lösung wird in der Regel das Führungsgestell über einen Flaschenzug oder einen Hebekran nach Lösen von der Tragvorrichtung bewegt. Im Bedarfsfall besteht weiterhin die Möglichkeit das Führungsgestell über Konsolen an dem Gerüstaufbau zu befestigen.

Alternativ besteht die Möglichkeit, dass das Führungsgestell aus zumindest einer Führungsschiene besteht, welche über Wandkonsolen als Tragvorrichtung an den Innenwänden oder einem Gerät befestigt ist und wenigstens eine, vorzugsweise zwei oder mehrere, Tragrollen des Schweißroboters abstützt, sodass vertikale oder horizontale Schweißungen entlang des Führungsgestells ausführbar sind. Eine Befestigung der Tragkonsolen kann beispielsweise über eine Schraubbefestigung oder über Permanentmagnete erfolgen, soweit die Außenwandungen des zu verkleidenden Behälters aus Stahl bestehen. Die letztgenannte Variante eignet sich daher vorzugsweise für vertikale oder zur Vertikalen geneigt verlaufende Schweißnähte. Aus diesem Grund wird das Führungsgestell zunächst im oberen oder unteren Bereich in einer annähernd gewünschten Position fixiert und nach vollständiger Ausrichtung des gegenüberliegenden Endes befestigt. Vorzugsweise ist die Tragvorrichtung mit dem Führungsgestell über eine Konsole verbunden, welche zudem über eine Hebeeinrichtung in der Höhe verstellbar ist und eine Verlagerung des Führungsgestells in die jeweilige Arbeitshöhe ermöglicht.

Damit die zu schweißende Innenauskleidung nicht beschädigt wird bzw. die Demontage des Führungsgestells nach beendeter Arbeit erleichtert wird, ist vorgesehen, dass die Konsole zumindest eine Führungsbuchse aufweist, in der ein an das Führungsgestell befestigter Bolzen gleitend aufgenommen ist oder dass die Konsole über zwei unter einem Winkel verstellbare Gelenke mit dem Führungsgestell verbunden ist. Somit kann das Führungsgestell gegenüber der Konsole und der Wand in der Tiefe zum Versetzen bewegt werden. Durch diese Maßnahme ist insbesondere sicher gestellt, dass bei unebenen Wänden oder einem geringen Vorsatz unabhängig von der Ausführung der Tragvorrichtung eine variable Anpassung an die vorhandene Wandung möglich ist. Ferner kann das Führungsgestell an den vorhandenen Fixpunkten nicht hängen bleiben und über diese nach dem Abheben hinweg bewegt werden.

In Ausgestaltung der Erfindung ist vorgesehen, dass der Schweißroboter eine Abtastvorrichtung aufweist, mit welcher die Schweißdüse nachführbar ist. Durch die Abtastvorrichtung erfolgt eine Steuerung der Schweißdüse mit einer Genauigkeit von +/- 2 mm, sodass die Schweißnaht exakt dem Verlauf der zu verschweißenden Bahnen folgt und damit ein Höchstmaß an Fertigungsgenauigkeit erzielbar ist. Durch eine vorhandene Überlappung der Kunststofffolien ist ferner gewährleistet, dass geringe Schweißtoleranzen aufgrund der Schweißnahtführung ausgeglichen werden können.

Die Bewegung des Schweißroboters erfolgt entweder über eine vorhandene Seilwinde entlang des Führungsgestells oder es wird ein Antrieb mit Antriebsmittel verwendet. Zum Antrieb des Schweißroboters sind hierbei Antriebsmittel vorgesehen, die beispielsweise aus einer Zahnstangenführung und einem Antriebsrad oder einer zwischen zumindest zwei Umlenkrollen eingespannten Endloskette und einem Mitnehmer bestehen, wobei der Antrieb über eine Steuerungseinrichtung beaufschlagbar ist. Zahnstange oder Endloskette werden hierbei vorzugsweise dem Führungsgestell zugeordnet, während hingegen der eigentliche Antrieb nur mit einem Mitnehmer oder einem Antriebsrad ausgestattet und direkt dem Schweißroboter zugeordnet ist. Hierdurch besteht insbesondere der Vorteil, dass das zu bewegende Gewicht verringert und der notwendige Antrieb nicht übermäßig belastet wird. Eine Ansteuerung des Antriebs kann hierbei hydraulisch, pneumatisch oder elektrisch erfolgen.

In weiterer Ausgestaltung der Erfindung ist vorgesehen, dass das Führungsgestell aus einzelnen Führungsmodulen besteht, die über verschwenkbaren Befestigungselementen miteinander verbunden sind. Dadurch, dass das Führungsgestell aus einzelnen Führungsmodulen besteht, ist eine individuelle Anpassung an die Höhe der zu bearbeitenden Wände möglich. Durch die Verwendung von verschwenkbaren Befestigungselementen ist ferner sichergestellt, dass die einzelnen Führungsmodule gegeneinander in der Tiefe und seitlich zueinander verschwenkt werden können, um Unebenheiten der Innenwandung ausgleichen zu können. Aus dem vorgenannten Grund sind die Zahnstangen im Übergangsbereich der Führungsmodule geteilt und zusätzlich abgerundet ausgeführt, damit die Zahnstangen an den Verlauf des Führungsgestells angepasst werden können. Hierzu wird beispielsweise vorgeschlagen, dass die Zahnstangenführung durchgehend ausgebildet ist und durch ein einhängbares Gelenk, insbesondere Kugelgelenk, ein Gummilager oder eine Konusbohrung mit ineinandergreifenden spitz- und stumpfwinkligen Konus, miteinander verbunden sind und somit eine flexible Bewegung seitlich und in der Tiefe ermöglichen. Das Führungsgestell selbst beziehungsweise die einzelnen Führungsmodule bestehen aus einer oder mehreren parallelen Laufschienen, Traversen und Quertraversen, die die Laufschienen miteinander verbinden. Zusätzliche Traversen können teilweise doppelt angeordnet und überkreuz liegend ausgebildet sein, damit gegenüber den Befestigungspunkten genügend Bewegungsspiel vorhanden ist, damit das Führungsgestell in einer optimalen Position zur vorzusehenden Schweißnaht befestigt werden kann, sofern eine Wandbefestigung erfolgt. Damit die Laufschienen beziehungsweise die einzelnen Führungsmodule eine seitliche Bewegung ermöglichen, ist ferner vorgesehen, dass im Übergangsbereich der einzelnen Module die Laufschienen beabstandet ausgeführt und einen vergrößerten Einschnitt aufweisen. In oder an den Laufschienen selbst gleiten die Rollen des Schweißroboters hin und her, wobei es sich um außen oder innen liegende Rollen handeln kann. Es kann jedoch auch ein Führungsschlitten mit mehreren Rollen verwendet werden, die die Führungsschienen einklemmend umgreifen. Der besondere Vorteil dieser Ausführung besteht darin, dass das Schienensystem mit den zugehörigen Schlitten geradlinig oder gekrümmt verlaufen kann und somit der Schweißroboter auch entlang von Wölbungen oder Abrundungen führbar ist. Zur selbstständigen Bewegung des Führungsschlitten kann eine Zahnstange, eine anschraubbare Verzahnung oder eine angeschraubte Rollenkette mit Anbauelementen verwendet werden, wobei der Führungsschlitten mit einem eigenen Antrieb ausgestattet ist, der in die Verzahnung eingreift.

Alternativ besteht bei horizontalen Schweißnähten die Möglichkeit, dass der Schweißroboter durch zumindest eine höher gelegene Tragrolle verfahrbar gelagert ist und durch wenigstens eine Andruckrolle, welche an einer zweiten Führungsschiene anliegt, in Richtung auf die Innenverkleidung andrückbar ist oder es erfolgt eine außermittige Lagerung des Schweißroboters an der höher gelegenen Tragrolle, sodass durch das Eigengewicht der Schweißroboter in Richtung auf die Innenverkleidung gedrückt wird und somit einen ausreichenden Anpressdruck für die zu ziehende Schweißnaht erzeugt.

Vorzugsweise ist in weiterer Ausgestaltung der Erfindung vorgesehen, dass eine Befestigung des Führungsgestells oder der Konsolen an den vorhandenen Fixpunkten der auszukleidenden Wände erfolgt, wobei die Fixpunkte durch vorhandene Befestigungsbolzen der Innenverkleidung an den Innenwänden vorgegeben sind. Diese Fixpunkte werden beispielsweise dazu benötigt, die Innenverkleidung, welche sich über mehrere Meter erstreckt, an den Innenwänden zu befestigen bevor eine Verschweißung erfolgt und diese später zu halten. Daher bietet es sich an, diese Fixpunkte für die Befestigung des Führungsgestells zu verwenden. Es handelt sich hierbei beispielsweise um Befestigungsbolzen, die nach innen vorstehen und nach Beendigung der Arbeiten durch eine aufgeschweißte Kunststoffabdeckung verschlossen werden. Aus diesem Grund brauchen keine zusätzlichen Befestigungsbolzen vorgesehen zu werden, sodass auch keine zusätzlichen Kosten entstehen. Dadurch, dass die Fixpunkte unter Berücksichtigung der Wandform und Größe bestimmte Abstände zueinander aufweisen, ist erfindungsgemäß vorgesehen, dass die Traversen und Quertraversen des Führungsgestells zumindest ein, vorzugsweise mehrere Langlöchern, zur Befestigung des Führungsgestells aufweisen, sodass eine verbesserte Positionierung bei der Montage gegeben ist, um den Schweißroboter gegenüber der Schweißnaht besser auszurichten.

Die Verwendung einer Tragevorrichtung mit einer Führungsschiene zur Halterung des Führungsgestells ermöglicht somit das Führungsgestell entsprechend der Bahnenbreite ohne großen Kraftaufwand und mit verkürzten Montage- beziehungsweise Demontagezeiten seitlich oder in der Höhe zu versetzen. Für den Fall, dass die Gehäusewandung, Vorsprünge oder Absätze aufweist, besteht darüber hinaus die Möglichkeit, eine Anpassung an die Formgebung dadurch vorzunehmen, dass die Führungsschiene der Tragvorrichtung nicht nur horizontal, sondern ggf. abschnittsweise auch schräg verlaufend ausgebildet ist.

Selbstverständlich können je nach Einsatzzweck die verschiedenen Befestigungsmethoden und Führungsvarianten miteinander kombiniert werden.

In weiterer besonderer Ausgestaltung der Erfindung ist vorgesehen, dass die Abtastvorrichtung aus einer Führungsrolle, einem T-Profil oder einem Führungslineal besteht, die/das an der zu verschweißenden Kunststoffbahn entlang geführt zur Positionierung eines Schweißkopfes vorgesehen ist. Die Führungsrolle beziehungsweise das Führungslineal des Schweißroboters liegt an einer Kante der zu verschweißenden Folie an und dient somit zur nochmals verbesserten Seitenführung einer Schweißdüse, die somit exakt an der Kante entlang geführt werden kann, damit die Schweißnaht mit größtmöglicher Sorgfalt und absoluter Dichtigkeit ausgeführt werden kann. Zusätzlich besteht die Möglichkeit die miteinander verschweißten Folien zusammen zu drücken, um die Haltbarkeit der Schweißnaht zu erhöhen beziehungsweise eine ausreichende Gasdichtigkeit zu gewährleisten. Aus diesem Grund ist im Weiteren vorgesehen, dass der Schweißkopf mit Hilfe der Führungsrolle oder des Führungslineals über eine Wegstrecke von +/- 20 mm seitlich gegenüber der festen Positionierung des Schweißroboters bewegbar ist, damit auch geringe Differenzen, durch Verwerfungen oder Auswölbungen der Innenverkleidung ausgeglichen werden können. Alternativ besteht die Möglichkeit eine Laserabtastung der Folienkante vorzunehmen und den Schweißkopf hydraulisch, pneumatisch oder elektrisch entlang der Folienkante zu führen.

Die verwendeten Schweißroboter können hierbei zur Ausführung von Durchlichtschweißungen mittels Laser oder Infrarot-Technik ausgebildet sein, wobei in vorteilhafter Weise die Roboter selbstlaufend ausgebildet sind und über eine entsprechende Steuerungseinrichtung die Vortriebsgeschwindigkeit in Abhängigkeit der verwendeten Kunststoffmaterialien geregelt werden kann. Alternativ besteht die Möglichkeit andere herkömmliche Schweißtechniken einzusetzen, wie beispielsweise Warmgasziehschweißen, Extrusionsschweißen oder Überlapp-Warmgasschweißen.

In weiterer Ausgestaltung der Erfindung ist vorgesehen, dass der Schweißroboter gegenüber dem Führungsgestell für den Fall eines Austausches oder zum Abbau entkoppelbar ist und somit beispielsweise über einen Flaschenzug herabgelassen werden kann. Um beim Versetzten eine Beschädigung der Fixpunkte durch das Führungsgestell zu verhindern ist ein abgekantetes Leitblech vorhanden, welches das Führungsgestell über die Bolzen der Fixpunkte hinwegführt.

Zur Überwachung der Schweißarbeiten kann der Schweißroboter mit einer WEB-Kamera ausgestattet sein, sodass eine ständige computerunterstützte Überwachung ermöglicht wird, insbesondere kann ein Bediener die laufenden Arbeiten über einen Monitor aus der Ferne überwachen.

Um Verwerfungen der Innenverkleidung auszuschließen und eine saubere Schweißnaht zu gewährleisten ist in weiterer Ausgestaltung der Erfindung vorgesehen, dass der Folienrand der Kunststoffbahn durch eine Rolle oder ein Leitblech, beispielsweise in T-Form, eingefasst beziehungsweise unterstützt ist, sodass durch den Schweißroboter und/oder einer zusätzlichen Andruckrolle die Kunststoffbahn mit Schweißhilfsmitteln nach der Verschweißung kurzzeitig verpresst wird. In Folge des geringen Energieeintrages braucht die Verpressung nur über einen relativ kurzen Zeitraum zu erfolgen, sodass unter Berücksichtigung der Schweißgeschwindigkeit eine ausreichende Zeit verbleibt, um während der Abkühlphase der bereits fertig gestellten Schweißnaht eine Verpressung vorzunehmen. Alternativ besteht zusätzlich die Möglichkeit, dass die Folienränder durch verschiebbare Permanentmagnete gegen die Rolle oder das Leitblech für den Zeitpunkt der Verschweißung fixiert werden. Die Magnete können beispielsweise auf einer verschiebbaren Folie angeordnet sein, die gleichzeitig mit dem Schweißroboter bewegbar ist.

Die erfindungsgemäße Ausführung einer Führungseinrichtung zeichnet sich insbesondere dadurch aus, dass diese überall dort eingesetzt werden kann, wo beispielsweise Überkopfarbeiten notwendig sind oder wo Folien als Auskleidung über Fixpunkte befestigt werden und somit eine Positionierung der Führungseinrichtung nicht möglich ist und im Falle von Edelstahl oder GFK als Behältermaterial auch Magnete nicht einsetzbar sind. Hierbei kann die Tragvorrichtung zum Umsetzen des Führungsgestells entweder an einem Gerüst oder gegebenenfalls an der Innenwandung befestigt werden, wobei nach Beendigung der Schweißvorgänge diese Tragvorrichtung wieder entfernt wird. Ein wesentlicher Vorteil liegt auch darin, dass der Schweißroboter dort eingesetzt werden kann, wo gegebenenfalls Schweißnähte unter gleichzeitigem Andruck vorgenommen werden müssen und somit eine größere Kraftanstrengung über einen längeren Zeitraum erforderlich ist. Diese Arbeiten können in der Regel durch einen automatischen Vortrieb des Schweißroboters wesentlich besser ausgeführt werden.

Die Erfindung wird im Nachfolgenden anhand der Figuren erläutert.

Es zeigt
- Fig. 1: in einer Draufsicht und zwei Seitenansichten eine erfindungsgemäße Tragvorrichtung mit Führungsgestell in einer vertikalen Position,
- Fig. 2: eine erfindungsgemäße Tragvorrichtung in einer horizontalen Position auf einem Gerüst,
- Fig. 3: in einer perspektivischen Ansicht einen erfindungsgemäßen Schweißroboter mit einem horizontal ausgerichteten Führungsgestell, welches über Konsolen an Fixpunkten aufgehängt ist,
- Fig. 4: in einer perspektivischen Ansicht einen Schweißroboter, wie er bereits aus Figur 3 bekannt ist, wobei die Festlegung über Konsolen und Permanentmagnete an der Innenwand des Behälters erfolgt,
- Fig. 5: in einer perspektivischen Ansicht einen Schweißroboter, wie er bereits aus Figur 3 bekannt ist, wobei dieser über eine Laufrolle derart aufgehängt ist, dass er mit seinem Eigengewicht gegen die Innenverkleidung drückt und
- Fig. 6: in einer perspektivischen Ansicht einen Schweißroboter, der über Führungsrollen an einem Gerüst befestigt ist.

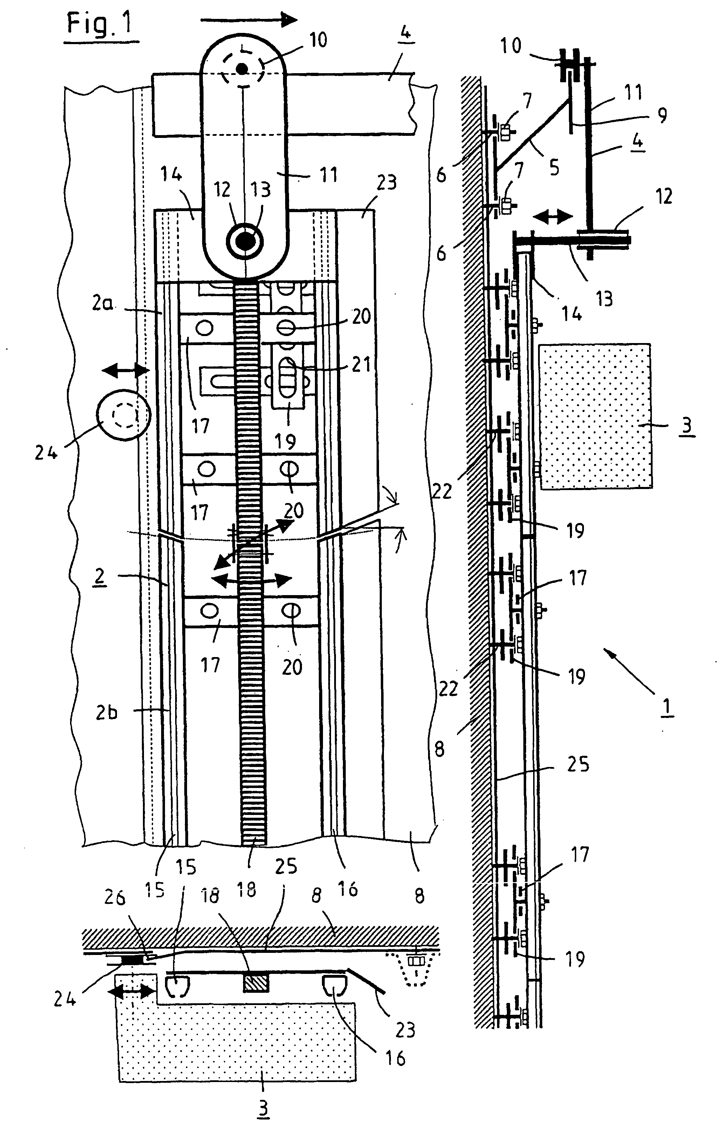

Figur 1 zeigt eine Führungseinrichtung 1, bestehend aus einem Führungsgestell 2 für einen Schweißroboter 3 sowie eine Tragvorrichtung 4, welche zur Halterung des Führungsgestells 2 verwendet wird.

Die Tragvorrichtung 4 besteht im gezeigten Ausführungsbeispiel aus einer Konsole 5, welche über Schraubbolzen 6 mit Muttern 7 an einer Wand 8 befestigt ist und einer Führungsschiene 9 zur Aufnahme mindestens einer Laufrolle 10. Die Laufrolle 10 ist im gezeigten Ausführungsbeispiel auf die Führungsschiene 9 aufgesetzt und gleitet an der oberen Kante entlang. Alternativ besteht die Möglichkeit, dass anstelle einer Führungsschiene 9 ein Hohlprofil verwendet wird, in denen die Laufrollen aufgenommen sind. Die Laufrollen 10 sind drehbar auf eine Achse einer Konsole 11 befestigt, die im unteren Bereich mit einer Führungsbuchse 12 versehen sind. In der Führungsbuchse 12 ist ein Bolzen 13 gleitend aufgenommen, der unmittelbar mit einer Quertraverse 14 des Führungsgestells 2 verbunden ist. Die Quertraverse 14 bildet den oberen Abschluss des Führungsgestells 2. Das Führungsgestell 2 besteht aus zwei parallel verlaufenden Laufschienen 15, 16, die durch weitere Quertraversen 17 miteinander verbunden sind, sodass eine stabile Einheit geschaffen wird. In der Mitte zwischen den beiden Laufschienen 15, 16 verläuft im gezeigten Ausführungsbeispiel eine Zahnstangenführung 18, in die ein nicht dargestelltes Antriebsrad des Schweißroboters 3 zur Auf- und Abwärtsbewegung eingreift. Die Quertraversen 17 sowie weitere Traversen 19 sind mit Bohrungen 20 beziehungsweise Langlöchem 21 versehen, die eine Verschiebung und Befestigung des Führungsgestells 2 gegenüber der Wandfläche in jeder beliebigen Position ermöglichen. Hierdurch besteht die Möglichkeit, dass das Führungsgestell 2 an vorhandenen Fixpunkten 22 der Wand 8 befestigt werden kann. Die Fixpunkte sind durch den Aufbau des Behälters beziehungsweise der Innenverkleidung vorgegeben und dienen zur Halterung der ansonsten losen Innenverkleidung, sodass ohne das Einbringen von weiteren Befestigungsbolzen das Führungsgestell 2 an diesen Fixpunkten 22 befestigt werden kann. Dadurch, dass die Abstände der Fixpunkte 22 vorgegebenen sind, ist eine Anpassung der Quertraversen 17 beziehungsweise Traversen 19 erforderlich und hierzu dienen die Bohrungen 20 beziehungsweise Langlöcher 21, sodass jede beliebige Position des Führungsgestells 2 erreicht werden kann und eine Befestigung an der Innenwandung möglicht ist.

In Abhängigkeit der Form des Außenbehälters können hierbei Unebenheiten in der Wandung vorhanden sein oder aber die Innenverkleidung verläuft in Teilbereichen nicht exakt vertikal. Aus diesem Grund besteht das Führungsgestell 2 aus einzelnen Führungsmodulen 2a, 2b, die untereinander gelenkig verbunden und verschraubt sind und beispielsweise in den Übergängen der Laufschienen 15, 16 einen Einschnitt oder einen Abstand zueinander aufweisen, sodass eine Verschwenkbarkeit zur Seite möglich ist. Ebenso ist die Zahnstangenführung im Übergangsbereich in der Art ausgebildet, beispielsweise gegenseitig abgerundet, dass diese Schwenkbewegungen ausgeführt werden können. Hierzu besteht ferner die Möglichkeit, dass die Zahnstangenführung 18 im Übergangsbereich über Kugelgelenke miteinander verbunden ist, sodass ein Ausgleich nicht nur seitlich, sondern auch in der Tiefe möglich ist.

Das Führungsgestell 2 weist im gezeigten Ausführungsbeispiel rechtsseitig ein Leitblech 23 auf, welches eine Beschädigung der Fixpunkte verhindert. Zur Führung der nicht dargestellten Schweißdüse des Schweißroboters 3 ist eine Führungsrolle 24 vorgesehen, die entlang der Kante der Innenverkleidung 25 in der Art geführt wird, dass die Kante 26 innerhalb der Führungsrolle an dieser anliegt und somit eine exakte Führung der Schweißdüse gewährleistet ist.

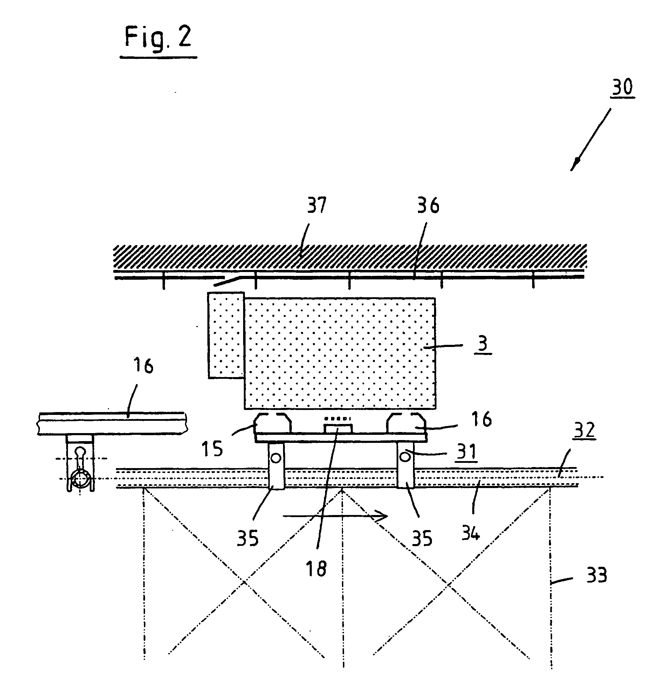

Figur 2 zeigt eine Führungseinrichtung 30 mit einem Führungsgestell 31, das auf einer Tragvorrichtung 32 in Form eines Gerüstes 33 mit oberen Befestigungsrohren 34 ausgebildet ist. Das Führungsgestell 31 ist mittels Rohrschellen 35 auf den oberen Befestigungsrohren 34 aufgeschraubt und kann nach Lösen der Rohrschellen 35 seitlich verschoben werden. Zur Führung des Schweißroboters 3 besitzt das Führungsgestell 31 wiederum Laufschienen 15, 16 und eine Zahnstangenführung 18, die im Wesentlichen mit der aus Figur 1 identisch ist. Diese Anordnung der Tragvorrichtung 32 wird vorzugsweise für eine Überkopfschweißung verwendet, wenn der Schweißroboter 3 zum Schweißen der Innenverkleidung 36 an einer Decke 37 eingesetzt wird.

Alternativ besteht selbstverständlich die Möglichkeit, wie insbesondere die nachfolgenden Figuren zeigen, dass ein Führungsgestell an der Behälterwandung oder einem Gerüst seitlich befestigt wird.

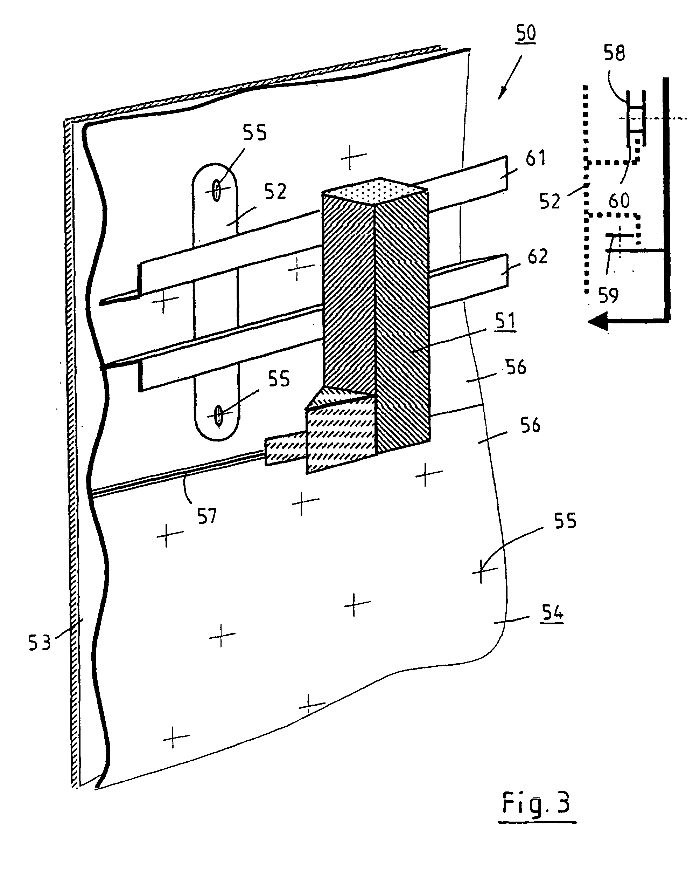

Figur 3 zeigt in einer perspektivischen Ansicht einen über eine Führungseinrichtung 50 befestigten Schweißroboter 51, der im gezeigten Ausführungsbeispiel über zwei Führungsschienen 61, 62 und eine Konsole 52 unmittelbar an der Innenseite der Behälterwandung 53 befestigt ist. Von der Behälterwandung 53 ist nur ein Ausschnitt gezeigt, ebenso wie von der Innenverkleidung 54, die bereits über Fixpunkte 55 mit der Behälterwandung 53 verbunden ist. Die Innenverkleidung 54 besteht aus einzelnen Folienstreifen 56, welche mittels des Schweißroboters 51 entlang einer Schweißnaht 57 gasdicht verbunden werden.

Der Schweißroboter 51 ist mit seinen äußeren Umrissen nur schematisch dargestellt, da es auf dessen Formgebung und Ausführung nicht ankommt. Die Aufhängung des Schweißroboters 51 erfolgt über eine oder mehrere Laufrollen 58 sowie Andruckrollen 59. Die Laufrolle 58 liegt mit ihrer T-förmigen Nut 60 unmittelbar auf der Kante einer Führungsschiene 61 auf, während die Andruckrolle 59 mit ihrer Lauffläche auf der Innenseite einer zweiten Führungsschiene 62 anliegt und somit den Schweißroboter 51 in Richtung der Innenverkleidung 54 drückt. Die beiden Laufschienen 61, 62 sind über eine Konsole 52 miteinander verbunden, die an zumindest zwei Fixpunkten 55 auf der Innenseite der Behälterwandung 53 befestigt ist. Mehrere dieser Konsolen sind einerseits mit den Führungsschienen 61, 62 verbunden und andererseits über weitere Fixpunkte mit der Behälterwandung 53. Die Konsole 52 stellt in dem gezeigten Ausführungsbeispiel die Tragvorrichtung dar, wobei nach dem Lösen der nicht dargestellten Befestigungsschrauben der Schweißroboter 51 mit samt den Führungsschienen 61, 62 und den Konsolen 52 durch eine nicht dargestellte Hebeeinrichtung in der Höhe veränderbar ist. In einer verkleinerten Seitenansicht ist die Führungseinrichtung 50 nochmals erkennbar, und zwar die Konsole 52 mit Führungsschienen 61, 62 sowie der Laufrolle 58 und der Andruckrolle 59.

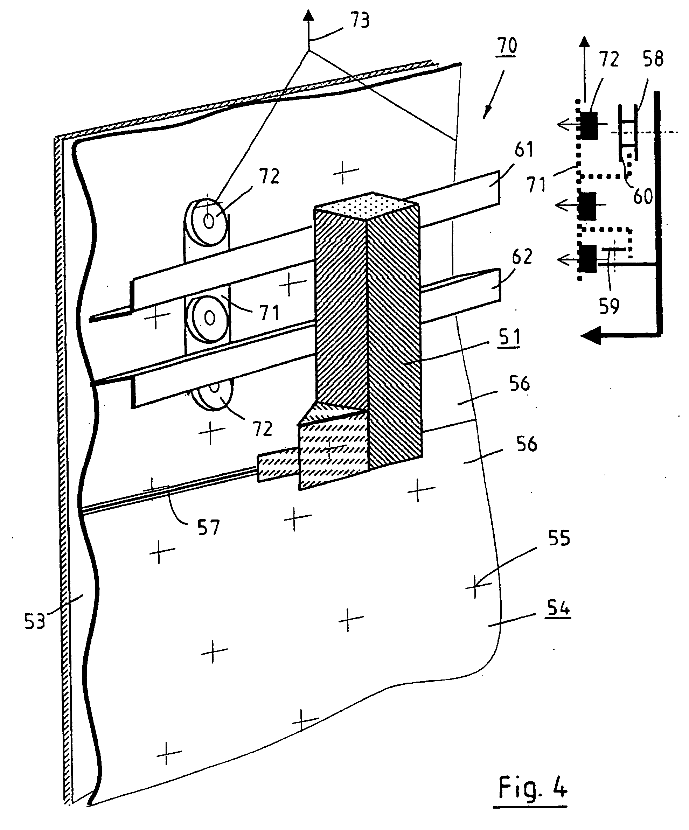

Figur 4 zeigt ebenfalls in einer perspektivischen Seitenansicht eine Führungseinrichtung 70, die zur Befestigung eines bereits aus Figur 3 bekannten Schweißroboters 51 vorgesehen ist. Der Schweißroboter 51 ist über die Führungseinrichtung 70, bestehend aus Führungsschienen 61, 62 und einer Konsole 71 mit der Behälterwandung 53 verbunden. Gegenüber der bereits aus Figur 3 bekannten Befestigungsart erfolgt jedoch die Befestigung der Konsole 71 über Permanentmagnete 72, wobei in diesem Fall vorausgesetzt wird, dass die Behälterwandung 53 aus einem magnetisierbaren Material besteht. Zur Höhenverstellung der Führungseinrichtung 70 dient eine Hebeeinrichtung 73, die durch den nach oben gerichteten Pfeil symbolisiert wird. Ähnlich wie in Figur 3 ist in einer kleinen Seitenansicht die Führungseinrichtung 70 des Schweißroboters 51 dargestellt, und zwar mit einer oberen Laufrolle 58 und einer unteren Andruckrolle 59, wobei die Laufrolle auf einer Kante der Führungsschiene 61 sitzt, während die Andruckrolle auf der Innenseite der unteren Führungsschiene 62 anliegt und somit den Schweißroboter 51 in Richtung auf die Behälterwandung beziehungsweise die Innenverkleidung 56 drückt. Ein Unterschied besteht lediglich darin, dass anstelle einer Befestigung über die Fixpunkte eine solche über Permanentmagnete 72 erfolgt.

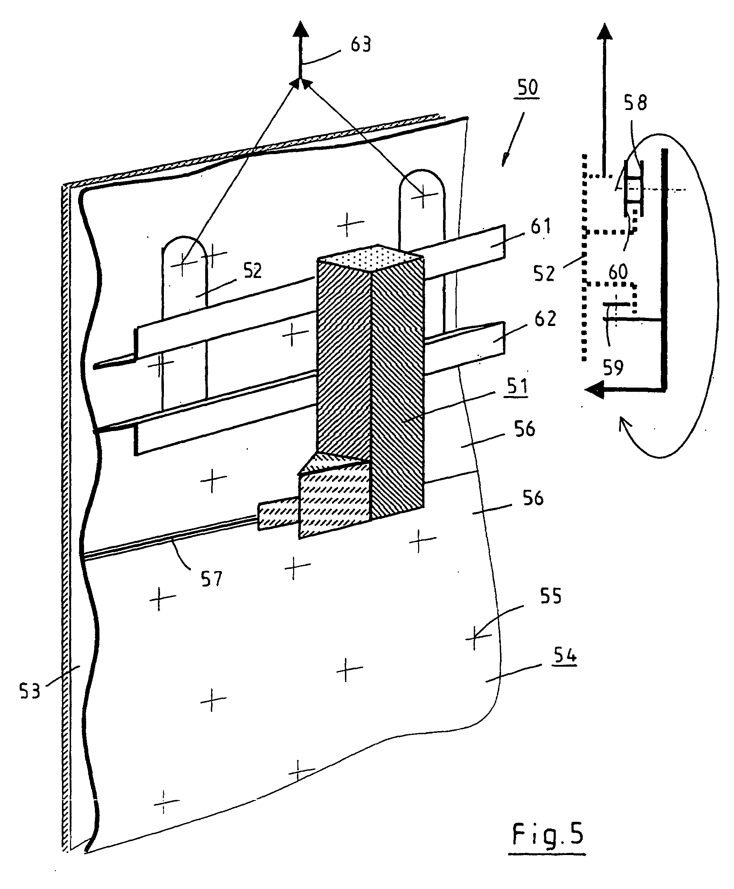

Figur 5 entspricht weitestgehend der aus Figur 3 bekannten Führungseinrichtung 50, wobei in dieser Zeichnung zusätzlich eine Aufhängung der gesamten Führungseinrichtung 50 durch eine Hebeeinrichtung 73 erfolgt, die durch die aufeinander zulaufenden Pfeile symbolisiert ist, sodass eine Verlagerung des Schweißroboters 51 in der Höhe ermöglicht wird. Ferner wird durch einen Pfeilbogen in der kleineren Seitenansicht die Kraftwirkung gezeigt, aufgrund dessen, dass der Schweißroboter 51 über eine außerhalb des Schwerpunkts gelagerte Laufrolle 58 aufgehängt ist. Die Aufhängung erfolgt so, dass der Schweißroboter 51 gegen die Innenverkleidung 54 beziehungsweise Behälterwandung 53 angedrückt wird und somit bereits einen ausreichenden Anpressdruck für die zu erzeugende Schweißnaht 57 herbeiführt.

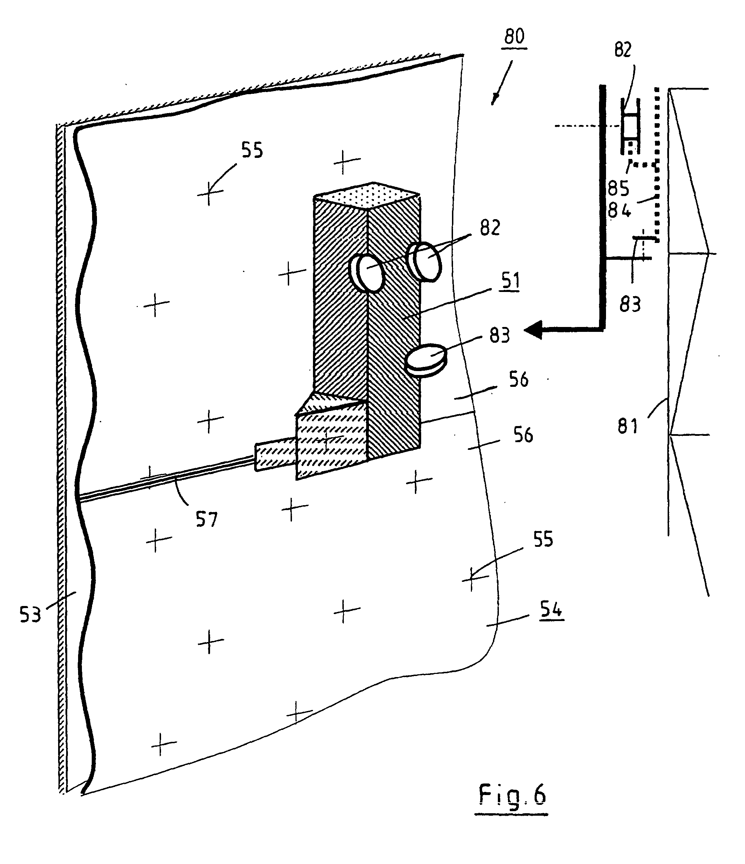

Figur 6 zeigt demgegenüber eine Führungseinrichtung 80, die eine Befestigung des Schweißroboters 51 an einem Gerüst 81 ermöglicht. Das Gerüst 81 ist auf der verkleinerten Seitenansicht erkennbar, während in der perspektivischen Ansicht nur der Schweißroboter 51 mit Laufrollen 82 und Andruckrollen 83 dargestellt ist. An dem Gerüst 81 ist eine Führungsschiene 84 befestigt, welche über einen rechtwinklig angeordneten Schenkel 85 eine Lauffläche für die obere Laufrolle 82 bildet, während die untere Andruckrolle 83 an der Führungsschiene 84 anliegt. Eine Andruckkraft für den Schweißroboter 51 zur Herstellung der Schweißnaht 57 erfolgt hierbei durch Verlagerung des gesamten Gerüstes 81.

### Bezugszeichenliste:

- 1: Führungseinrichtung
- 2: Führungsgestell
- 3: Schweißroboter
- 4: Tragvorrichtung
- 5: Konsole
- 6: Schraubbolzen
- 7: Mutter
- 8: Wand
- 9: Führungsschiene
- 10: Laufrolle
- 11: Konsole
- 12: Führungsbuchse
- 13: Bolzen
- 14: Quertraverse
- 15: Laufschiene
- 16: Laufschiene
- 17: Quertraverse
- 18: Zahnstangenführung
- 19: Traverse
- 20: Bohrung
- 21: Langloch
- 22: Fixpunkt
- 23: Leitblech
- 24: Führungsrolle
- 25: Innenverkleidung
- 26: Kante
- 30: Führungseinrichtung
- 31: Führungsgestell
- 32: Tragvorrichtung
- 33: Gerüst
- 34: Befestigungsrohre
- 35: Rohrschelle
- 36: Innenverkleidung
- 37: Decke
- 50: Führungseinrichtung
- 51: Schweißroboter
- 52: Konsole
- 53: Behälterwandung
- 54: Innenverkleidung
- 55: Fixpunkt
- 56: Folienstreifen
- 57: Schweißnaht
- 58: Laufrolle
- 59: Andruckrolle
- 60: Nut
- 61: Führungsschiene
- 62: Führungsschiene
- 70: Führungseinrichtung
- 71: Konsole
- 72: Permanentmagnete
- 73: Hebeeinrichtung
- 80: Führungseinrichtung
- 81: Gerüst
- 82: Laufrolle
- 83: Andruckrolle
- 84: Führungsschiene
- 85: Schenkel

## Patentansprüche

1. Führungseinrichtung (1, 30, 50, 70, 80) für einen Schweißroboter (3, 51), insbesondere zum Verschweißen einer an vorhandenen Befestigungspunkten eines Behälters vorgehängten Innenverkleidung (54) aus Kunststofffolien, bestehend aus einem festlegbaren Führungsgestell (2, 31) mit zumindest einer Führung, wobei der Schweißroboter (3, 51) entlang des Führungsgestells (2, 31) verfahrbar ausgebildet ist,
**dadurch gekennzeichnet,**
**dass** das Führungsgestell (2, 31) mit einer festlegbaren Tragvorrichtung (4) verbunden ist und nach dem Lösen der Befestigung seitlich, quer zur Längsachse des Führungsgestells (2, 31), bewegbar ausgebildet ist.

2. Führungseinrichtung nach Anspruch 1,
**dadurch gekennzeichnet,**
**dass** das Führungsgestell (2, 31) horizontal, vertikal oder unter einem Neigungswinkel zur Horizontalen oder abschnittsweise schräg verlaufend ausgerichtet ist.

3. Führungseinrichtung nach Anspruch 1 oder 2,
**dadurch gekennzeichnet,**
**dass** das Führungsgestell (2, 31) nach dem Lösen der Tragvorrichtung (4) oder von der Tragvorrichtung (4) über eine Hebeeinrichtung (73) in der Höhe verlagerbar ist.

4. Führungseinrichtung nach Anspruch 1, 2 und 3,
**dadurch gekennzeichnet,**
**dass** die Tragvorrichtung (4) aus einem Gerüstaufbau (33) mit oben liegenden Befestigungsrohren (34) besteht, welche das Führungsgestell (2, 31) für eine Überkopfschweißung abstützen und wobei zur ortsfesten Halterung Verschraubungen (35) vorgesehen sind, sodass horizontale Schweißungen entlang des Führungsgestells (2, 31) ausführbar sind.

5. Führungseinrichtung nach Anspruch 1, 2 oder 3,
**dadurch gekennzeichnet,**
**dass** die Tragevorrichtung (4) aus einem Gerüst (81) mit seitlich liegenden Befestigungsrohren besteht, welche zumindest eine Führungsschiene (61, 62, 84) für eine seitliche Verschweißung halten und wobei zur ortsfesten Halterung Verschraubungen vorgesehen sind, sodass horizontale Schweißungen entlang des Gerüsts (81) ausführbar sind.

6. Führungseinrichtung nach Anspruch 1, 2 oder 3,
**dadurch gekennzeichnet,**
**dass** das Führungsgestell (2, 31) aus zumindest einer Führungsschiene (9) besteht, welche über Konsolen (5, 52, 71) als Tragvorrichtung (4) an den Wänden (8) oder einem Gerüst (81) befestigt ist und wenigstens eine, vorzugsweise zwei oder mehrere, Tragrollen (10) des Schweißroboters (3, 51) abstützt, sodass vertikale oder horizontale Schweißungen entlang des Führungsgestells (2, 31) ausführbar sind, wobei die Konsolen (5, 52, 71) über eine Hebeeinrichtung (73) in der Höhe verlagerbar sind.

7. Führungseinrichtung nach Anspruch 6,
**dadurch gekennzeichnet,**
**dass** die Konsolen (5, 52, 71) an den Innenwänden (8) anschraubbar ausgebildet und/oder durch Permanentmagnete (72) gehalten sind.

8. Führungseinrichtung nach einem oder mehreren der Ansprüche 1 bis 7,
**dadurch gekennzeichnet,**
**dass** die Tragvorrichtung (4) mit dem Führungsgestell (2, 31) über eine Konsole (11) verbunden ist, welche eine Verlagerung des Führungsgestells (2, 31) in der Tiefe vorsieht.

9. Führungseinrichtung nach Anspruch 8,
**dadurch gekennzeichnet,**
**dass** die Konsole (11) zumindest eine Führungsbuchse (12) aufweist, in der ein an dem Führungsgestell (2, 31) befestigter Bolzen (13) gleitend aufgenommen ist oder dass die Konsole (11) über zwei unter einem Winkel verstellbare Gelenke mit dem Führungsgestell (2, 31) verbunden ist.

10. Führungseinrichtung nach einem oder mehreren der Ansprüche 1 bis 9,
**dadurch gekennzeichnet,**
**dass** der Schweißroboter (3, 51) eine Abtastvorrichtung aufweist, mit welcher die Schweißdüse nachführbar ist.

11. Führungseinrichtung nach einem oder mehreren der Ansprüche 1 bis 10,
**dadurch gekennzeichnet,**
**dass** der Schweißroboter (3, 51) über eine Seilwinde verfahrbar ist oder dass ein Antrieb mit Antriebsmittel vorgesehen ist, der über eine Steuerungseinrichtung beaufschlagbar ist.

12. Führungseinrichtung nach einem oder mehreren der Ansprüche 1 bis 11,
**dadurch gekennzeichnet,**
**dass** der Schweißroboter (3, 51) durch zumindest eine höhergelegene Laufrolle (58, 82) verfahrbar gelagert ist und durch wenigstens eine Andruckrolle (59, 83), welche an einer zweiten Führungsschiene anliegt, in Richtung auf die Innenverkleidung (54) andrückbar ist oder dass der Schweißroboter (3, 51) durch zumindest eine höhergelegene Laufrolle (58, 82) verfahrbar und außermittig gelagert ist, sodass der Schweißroboter (3, 51) durch das Eigengewicht in Richtung auf die Innenverkleidung (54) geneigt ist und an dieser anliegt.

13. Führungseinrichtung nach Anspruch 11,
**dadurch gekennzeichnet,**
**dass** die Antriebsmittel aus einer Zahnstangenführung (18) und einem Antriebsrad oder einer zwischen Umlenkrollen eingespannten Endloskette und einem Mitnehmer bestehen, wobei die Zahnstangenführung (18) oder die Endloskette vorzugsweise dem Führungsgestell (2, 31) zugeordnet ist.

14. Führungseinrichtung nach Anspruch 13,
**dadurch gekennzeichnet,**
**dass** die Zahnstangenführung (18) im Übergangsbereich der Führungsmodule (2a, 2b) geteilt und abgerundet ausgeführt sind.

15. Führungseinrichtung nach Anspruch 13,
**dadurch gekennzeichnet,**
**dass** die Zahnstangenführungen (18) durchgehend ausgebildet ist und beispielsweise durch ein einhängbares Gelenk, insbesondere Kugelgelenk, ein Gummilager oder eine Konusbohrung mit ineinandergreifenden spitz- und stumpfwinkligen Konus, miteinander verbunden sind.

16. Führungseinrichtung nach einem oder mehreren der Ansprüche 1 bis 15,
**dadurch gekennzeichnet,**
**dass** das Führungsgestell (2, 31) oder die Führungsschienen (61, 62, 84) aus einzelnen Führungsmodulen (2a, 2b) bestehen, die über verschwenkbaren oder gelenkigen Befestigungselementen miteinander verbunden sind.

17. Führungseinrichtung nach einem der Ansprüche 1 bis 16,
**dadurch gekennzeichnet,**
**dass** das Führungsgestell (2, 31) bzw. einzelne Führungsmodule (2a, 2b) aus einer oder mehreren parallelen Laufschienen (15, 16) sowie Traversen (19) und Quertraversen (14, 17) bestehen, die zumindest teilweise doppelt angeordnet und überkreuz liegend angeordnet sind.

18. Führungseinrichtung nach Anspruch 17,
**dadurch gekennzeichnet,**
**dass** die Laufschienen (15, 16) im Übergangsbereich der einzelnen Führungsmodule (2a, 2b) beabstandet ausgeführt sind und einen vergrößerten Einschnitt aufweisen, sodass seitliche Schwenkbewegungen gegeneinander durchführbar sind.

19. Führungseinrichtung nach einem oder mehreren der Ansprüche 1 bis 18,
**dadurch gekennzeichnet,**
**dass** in oder an den Laufschienen (15, 16) Rollen des Schweißroboters (3, 51) hin- und hergleiten oder dass ein Führungsschlitten mit Laufrollen an dem Schienensystem anliegt.

20. Führungseinrichtung nach einem oder mehreren der Ansprüche 1 bis 19,
**dadurch gekennzeichnet,**
**dass** das Führungsgestell (2, 31) aus einem Schienensystem mit Führungsschlitten besteht, welches geradlinig oder gekrümmt ausgeführt ist und eine Bewegung der Führungsschlitten über eine Zahnstange, anschraubbare Verzahnung oder angeschraubte Rollenkette mit Anbauteilen erfolgt und dass der Führungsschlitten mit einem eigenen Antrieb versehen ist.

21. Führungseinrichtung nach einem oder mehreren der Ansprüche 1 bis 20,
**dadurch gekennzeichnet,**
**dass** eine Befestigung des Führungsgestells (2, 31) oder der Konsolen (5, 52, 71) an den vorhandenen Fixpunkten (22) der auszukleidenden Wände erfolgt, wobei die Fixpunkte (22) durch vorhandene Befestigungsbolzen der Innenverkleidung (25) an den Innenwänden (8) vorgegeben sind.

22. Führungseinrichtung nach einem oder mehreren der Ansprüche 1 bis 21,
**dadurch gekennzeichnet,**
**dass** die Traversen (19) und Quertraversen (14, 17) mit zumindest einem Langloch (21) zur Befestigung des Führungsgestells (2, 31) ausgestattet sind, sodass eine verbesserte Positionierung des Führungsgestells (2, 31) bei der Montage gegeben ist, um den Schweißroboter (3, 51) gegenüber der Schweißnaht besser auszurichten.

23. Führungseinrichtung nach einem oder mehreren der Ansprüche 1 bis 22,
dass die Abtastvorrichtung aus einer Führungsrolle (24), einem T-Profil oder einem Führungslineal besteht, die/das an der zu verschweißenden Kunststoffbahn entlang geführt zur Positionierung eines Schweißkopfes vorgesehen ist.

24. Führungseinrichtung nach einem oder mehreren der Ansprüche 1 bis 23,
**dadurch gekennzeichnet,**
**dass** die Abtastvorrichtung aus optischen Sensoren, beispielsweise Laservorrichtungen, besteht, die eine hydraulische, pneumatische oder elektrische Nachführung des Schweißkopfes vornehmen.

25. Führungseinrichtung nach einem oder mehreren der Ansprüche 1 bis 24,
**dadurch gekennzeichnet,**
**dass** der Schweißkopf mit Hilfe der Abtastvorrichtung über eine Wegstrecke von +/- 20 mm seitlich gegenüber der festen Positionierung des Schweißroboters (3, 51) bewegbar ist.

26. Führungseinrichtung nach einem oder mehreren der Ansprüche 1 bis 25,
**dadurch gekennzeichnet,**
**dass** der Schweißroboter (3, 51) zur Ausführung von Durchstrahllichtschweißungen mittels Laser oder Infrarottechnik ausgebildet ist.

27. Führungseinrichtung nach einem oder mehreren der Ansprüche 1 bis 26,
**dadurch gekennzeichnet,**
**dass** der Schweißroboter (3, 51) gegenüber dem Führungsgestell (2, 31) entkoppelbar ist und über einen Flaschenzug, Kran oder ähnlichem abnehmbar ist.

28. Führungseinrichtung nach einem oder mehreren der Ansprüche 1 bis 27,
**dadurch gekennzeichnet,**
**dass** das Führungsgestell (2, 31) ein abgekantetes Leitblech (23) aufweist.

29. Führungseinrichtung nach einem oder mehreren der Ansprüche 1 bis 28,
**dadurch gekennzeichnet,**
**dass** der Schweißroboter (3, 51) mit einer WEB-Kamera ausgestattet ist, durch welche eine computergesteuerte Überwachung der Schweißnahtführung während des Arbeitsvorgangs erfolgt.

30. Führungseinrichtung nach einem oder mehreren der Ansprüche 1 bis 29,
**dadurch gekennzeichnet,**
**dass** der Folienrand der Kunststoffbahnen durch eine Rolle oder ein Leitblech, beispielsweise in T-Form, eingefasst beziehungsweise unterstützt ist, sodass durch den Schweißroboter (3, 51) und/oder einer zusätzlichen Andruckrolle die Kunststoffbahn mit Schweißhilfsmitteln nach der Verschweißung kurzzeitig verpressbar sind.

31. Führungseinrichtung nach Anspruch 30,
**dadurch gekennzeichnet,**
**dass** die Folienränder durch verschiebbare Permanentmagnete gegenüber einer Rolle oder einem Leitblech für den Zeitraum der Verschweißung fixierbar sind.

## Claims

1. Guiding unit (1, 30, 50, 70, 80), suitable for a welding robot (3, 51), in particular where plastic sheets are welded together to form the internal lagging (54) of a tank, the lagging being curtain-like suspended from existing fixing points in the tank; the guiding unit consisting of a lockable guiding support frame (2, 31) with at least one guide, the welding robot (3, 51) designed for travelling along the guiding support frame (2, 31),
**characterised in that**
the guiding support frame (2, 31) is connected with a lockable carrying device (4) and is designed to be moveable sidewise, transverse to the guiding support frame (2, 31) longitudinal axis, once the locking elements have been opened.

2. Guiding unit in accordance with claim 1,
**characterised in that**
the guiding support frame (2, 31) orientation is horizontal, vertical, or inclined relative to a horizontal line or inclined segment-wise.

3. Guiding unit in accordance with claim 1 or 2,
**characterised in that**
the guiding support frame (2, 31) is displaceable in height after the loosening of the carrying device or liftable up from the carrying device (4) by means of lifting equipment (73).

4. Guiding unit in accordance with claims 1, 2 and 3,
**characterised in that**
the carrying device (4) consists of a structure assembly (33) with fixing pipes (34) on top, which serve to support the guiding support frame (2, 31) during overhead welding, screw connectors (35) being provided for locking in place so that horizontal welding becomes practicable along the guiding support frame (2, 31).

5. Guiding unit in accordance with claim 1, 2 or 3
**characterised in that**
the carrying device (4) consists of a structure (81) with fixing pipes which lie laterally and hold at least one guiding rail (61, 62, 84) for the purpose of lateral welding, screw connectors being provided for locking in place so that horizontal welding along the structure (81) becomes practicable.

6. Guiding unit in accordance with claim 1, 2 or 3,
**characterised in that**
The guiding support frame (2, 31) consists of at least one guiding rail (9), which is fixed by brackets (5, 52, 71) as a carrying device (4) to the walls (8) or a structure (81) and supports at least one, preferably two or more than two, carrying rollers of the welding robot (3, 51), so that vertical or horizontal welding along the guiding support frame (2, 31) becomes practicable, the brackets (5, 52, 71) being displaceable in height by means of lifting equipment (73).

7. Guiding unit in accordance with claim 6,
**characterised in that**
the brackets (5, 52, 71) can be screwed to the inner walls (8) and / or held on the inner walls by permanent magnets (72).

8. Guiding unit in accordance with one or more than one of claims 1 to 7,
**characterised in that**
the carrying device (4) is connected with the guiding support frame (2, 31) by means of a bracket (11), which allows displacement of the guiding support frame (2, 31) downward.

9. Guiding unit in accordance with claim 8,
**characterised in that**
the bracket (11) is provided with at least one guiding bush (12) in which a pin (13) fixed to the guiding support frame (2, 31) slides, or **in that** the bracket (11) is connected with the guiding support frame (2; 31) by two joints of adjustable angularity.

10. Guiding unit in accordance with one or more than one of claims 1 to 9,
**characterised in that**
the welding robot (3, 51) is equipped with a scanner which leads the follow-up welding nozzle.

11. Guiding unit in accordance with one or more than one of claims 1 to 10,
**characterised in that**
the welding robot (3, 51) is moved by a rope winch, or **in that** a drive with actuating means is provided and switched by a control device.

12. Guiding unit in accordance with one or more than one of claims 1 to 11,
**characterised in that**
the welding robot (3, 51) runs on at least one track roller (58, 82), which is arranged at a higher level and can be pressed on the internal lagging (54) by at least one snubber roller (59, 83), which is in contact with a second guiding rail, or **in that** the welding robot (3, 51) runs on at least one track roller (58, 82) arranged at a higher level and so off the centre line that the welding robot (3, 51), by its own weight, assumes an inclined position and is in contact with the internal lagging (54).

13. Guiding unit in accordance with claim 11,
**characterised in that**
the actuating means consist of a toothed rack guide (18) and a driving wheel or an endless chain which is provided between return sprockets and is equipped with a dog, the toothed rack guide (18) or the endless chain preferably allocated to the guiding support frame.

14. Guiding unit in accordance with claim 13,
**characterised in that**
the toothed rack guide (18) is divided and rounded in the area of transition between the guiding modules (2a, 2b).

15. Guiding unit in accordance with claim 13,
**characterised in that**
the toothed rack guides (18) are of a continuous type and interconnected typically by a suspendable joint, especially a ball joint, a rubber bearing or a conical drilled hole with acute or obtuse angled cones which engage into one another.

16. Guiding unit in accordance with one or more than one claims 1 to 15,
**characterised in that**
the guiding support frame (2, 31), or the guiding rails (61, 62, 84), consist(s) of separate guiding modules (2a, 2b) which are interconnected by pivotable or articulated fixing elements.

17. Guiding unit in accordance with one of claims 1 to 16,
**characterised in that**
the guiding support frame (2, 31), or the individual guiding modules (2a, 2b) consist(s) of one or more than one parallel track rails (15, 16) and beams (19) and cross beams (14, 17), which are, at least in part, arranged double or lie across each other.

18. Guiding unit in accordance with claim 17,
**characterised in that**
the track rails (15, 16) are distanced in the transition area of the individual guiding modules (2a, 2b) and exhibit an enlarged gap so that lateral pivoting movements are possible relative to each other.

19. Guiding unit in accordance with one or more than one of claims 1 to 18,
**characterised in that**
rollers of the welding robot (3, 51) move forward and back in or on the track rails (15, 16) or **in that** the guiding carriage with track rollers is in contact with the rail system.

20. Guiding unit in accordance with one or more than one of claims 1 to 19,
**characterised in that**
the guiding support frame (2, 31) consists of a rail system, straight or curved, which is moved by a toothed rack, screw connectable toothing or a screw connected roller chain with attachments, and **in that** the guiding carriage is provided with a drive of its own.

21. Guiding unit in accordance with one or more than one of claims 1 to 20,
**characterised in that**
the guiding support frame (2, 31) or the brackets (5, 52, 71) are fastened to the fixing points provided (22) on the walls to be lined, the fixing points (22) being studs used for fixing the inner lining (25) on the inner walls (8).

22. Guiding unit in accordance with one or more than one of claims 1 to 21,
**characterised in that**
the beams (19) and the cross beams (14, 17) are provided with at least one oblong hole (21) for the fastening of the guiding support frame (2, 31) so that improved positioning of the guiding support frame (2, 31) is possible during assembly to enable improved positioning of the welding robot (3, 51) relative to the weld seam.

23. Guiding unit in accordance with one or more than one of claims 1 to 22,
**characterised in that**
the scanner consists of a guiding roller (24), a T-beam and a guiding straightedge, which is guided along the plastic web to be welded and serves to position the welding head.

24. Guiding unit in accordance with one or more than one of claims 1 to 23,
**characterised in that**
the scanner consists of optical sensors, typically laser devices, which ensure hydraulic, pneumatic or electric follow-up of the welding head.

25. Guiding unit in accordance with one or more than one of claims 1 to 24,
**characterised in that**
the welding head, using the scanner, is movable +/- 20 mm laterally relative to the fixed position of the welding robot (3, 51).

26. Guiding unit in accordance with one or more than one of claims 1 to 25,
**characterised in that**
the welding robot (3, 51) is designed to be suitable for irradiation welding by means of the laser or the infrared method.

27. Guiding unit in accordance with one or more than one of claims 1 to 26,
**characterised in that**
the welding robot (3, 51) can be uncoupled from the guiding support frame (2, 31) and removed by means of a pulley block, a crane or similar equipment.

28. Guiding unit in accordance with one or more than one of claims 1 to 27,
**characterised in that**
the guiding support frame (2, 31) is provided with a bent guiding plate (23).

29. Guiding unit in accordance with one or more than one of claims 1 to 28,
**characterised in that**
the welding robot (3, 51) is equipped with a web camera to achieve computer controlled monitoring of weld seam positioning during the operation:

30. Guiding unit in accordance with one or more than one of claims 1 to 29,
**characterised in that**
the sheet rim of the plastic webs is contained or supported by a roller or a guiding plate, typically of T-shape, so that the welding robot (3, 51) and / or an additional snubber roller can press together the plastic web with welding auxiliaries for a short period after welding.

31. Guiding unit in accordance with claim 30,
**characterised in that**
the rims of the sheets can be fixed by shiftable permanent magnets relative to a roller or a guiding plate during the period of the welding operation.

## Revendications

1. Dispositif de guidage (1, 30, 50, 70, 80) pour un robot de soudage (3, 51), notamment pour le soudage d'un revêtement intérieur (54) en films plastiques suspendu à des points de fixations existants d'un réservoir, composé d'un châssis de guidage (2, 31) fixable avec au moins une glissière, étant précisé que le robot de soudage (3, 51) est déplaçable le long du châssis de guidage (2, 31),
**caractérisé en ce que** le châssis de guidage (2, 31) est relié à un dispositif de portée (4) fixable et qu'après avoir desserré la fixation, il est mobile latéralement, à la transversale de l'axe longitudinal du châssis de guidage (2, 31).

2. Dispositif de guidage selon la revendication 1,
**caractérisé en ce que** le châssis de guidage (2, 31) est orienté horizontalement, verticalement ou sous un angle d'inclinaison par rapport à l'horizontale ou par endroits à l'oblique.

3. Dispositif de guidage selon la revendication 1 ou 2,
**caractérisé en ce que** le châssis de guidage (2, 31) est décalable en hauteur après avoir desserré le dispositif de portée (4) ou à partir du dispositif de portée (4) via un dispositif de relevage (73).

4. Dispositif de guidage selon la revendication 1, 2 et 3,
**caractérisé en ce que** le dispositif de portée (4) est composé d'une structure en forme de bâti (33) avec des tubes de fixations supérieurs (34), qui soutiennent le châssis de guidage (2, 31) pour un soudage au plafond et sur lesquels des pattes filetées (35) sont prévues pour un support fixe de telle sorte que des soudages horizontaux le long du châssis de guidage (2, 31) sont réalisables.

5. Dispositif de guidage selon la revendication 1, 2 ou 3,
**caractérisé en ce qu'**un dispositif de portée (4) est composé d'un bâti (81) avec des tubes de fixation placés latéralement, qui tiennent au moins un rail de guidage (61, 62, 84) pour un soudage latéral et sur lesquels des pattes filetées sont prévues pour un support fixe de telle sorte que des soudages horizontaux le long du bâti (81) sont réalisables.

6. Dispositif de guidage selon la revendication 1, 2 ou 3,
**caractérisé en ce que** le châssis de guidage (2, 31) est composé d'au moins un rail de guidage (9), qui, en tant que dispositif de portée (4), est fixé par l'intermédiaire de consoles (5, 52, 71) sur les parois (8) ou sur un bâti (81) et soutient au moins une, de préférence deux ou plusieurs rouleaux porteurs (10) du robot de soudage (3, 51), de telle sorte que des soudages verticaux ou horizontaux le long du châssis de guidage (2, 31) sont réalisables, étant précisé que les consoles (5, 52, 71) sont décalables en hauteur par l'intermédiaire d'un dispositif de relevage (73).

7. Dispositif de guidage selon la revendication 6,
**caractérisé en ce que** les consoles (5, 52, 71 sont vissables et/ou sont maintenues par des aimants permanents (72) sur les parois intérieures (8).

8. Dispositif de guidage selon l'une ou plusieurs des revendications 1 à 7,
**caractérisé en ce que** le dispositif de portée (4) est relié avec le châssis de guidage (2, 31) par l'intermédiaire d'une console (11) qui prévoit un décalage du châssis de guidage (2, 31) en profondeur.

9. Dispositif de guidage selon la revendication 8,
**caractérisé en ce que** la console (11) présente au moins une douille de guidage (12) dans laquelle un boulon (13) fixé sur le châssis de guidage (2, 31 ) est logé par glissement ou que la console (11) est reliée avec le châssis de guidage (2, 31) par l'intermédiaire de deux articulations réglables sous un angle.

10. Dispositif de guidage selon l'une ou plusieurs des revendications 1 à 9,
**caractérisé en ce que** le robot de soudage (3, 51) présente un dispositif de palpage permettant un asservissement de la buse de soudage.

11. Dispositif de guidage selon l'une ou plusieurs des revendications 1 à 10,
**caractérisé en ce que** le robot de soudage (3,51) est déplaçable à l'aide d'un treuil ou qu'un entraînement avec des éléments de transmission est prévu, lequel peut être alimenté par l'intermédiaire d'un dispositif de commande.

12. Dispositif de guidage selon l'une ou plusieurs des revendications 1 à 11,
**caractérisé en ce que** le robot de soudage (3, 51) est au moins déplaçable au moyen d'un galet de roulement (58, 82) et qu'il est repoussable en direction du revêtement intérieur (54) par au moins un rouleau-presseur (59, 83) qui est en appui contre un second rail de guidage ou que le robot de soudage (3, 51) est au moins déplaçable au moyen d'un galet de roulement (58, 82) placé en hauteur et décentré, de telle sorte que le robot de soudage (3, 51) est incliné en direction du revêtement intérieur (54) sous l'effet de son propre poids et qu'il est en appui contre ce dernier.

13. Dispositif de guidage selon la revendication 11,
**caractérisé en ce que** les éléments de transmission comprennent une glissière à crémaillère (18) et un pignon d'entraînement ou d'une chaîne sans fin tendue entre des galets de renvoi et un entraîneur, étant précisé que la glissière à crémaillère (18) ou la chaîne sans fin sont de préférence affectées au châssis de guidage (2, 31).

14. Dispositif de guidage selon la revendications 13,
**caractérisé en ce que** la glissière à crémaillère (18) est divisée dans la zone de transition des modules de guidage (2a, 2b) et arrondie.

15. Dispositif de guidage selon la revendication 13,
**caractérisé en ce que** les glissières à crémaillère (18) sont réalisées en continu et qu'elles sont par exemple reliées entre elles par une articulation accrochable, notamment une articulation à rotule, un support en caoutchouc ou un alésage conique avec un cône à angle aigu ou obtus s'engrenant dedans.

16. Dispositif de guidage selon l'une ou plusieurs des revendications 1 à 15,
**caractérisé en ce que** le châssis de guidage (2, 31) ou les rails de guidage (61, 62, 84) sont composés de modules de guidage séparés (2a, 2b) qui sont reliés entre eux par l'intermédiaire d'éléments de fixations pivotants ou articulés.

17. Dispositif de guidage selon l'une des revendications 1 à 16,
**caractérisé en ce que** le châssis de guidage (2, 31) ou/et les modules de guidage séparés (2a, 2b) sont composés d'un ou de plusieurs rails de roulement (15, 16) parallèles ainsi que de traverses (19) et de traverses transversales (14, 17) qui sont en partie au moins disposées en double et sont placés en croix.

18. Dispositif de guidage selon la revendication 17,
**caractérisé en ce que** les rails de roulement (15, 16) sont écartés dans la zone de transition des différents modules de guidage (2a, 2b) et qu'ils présentent un creux de grande taille de telle sorte que des mouvements de pivotement latéraux l'un contre l'autre sont réalisables.

19. Dispositif de guidage selon l'une ou plusieurs des revendications 1 à 18,
**caractérisé en ce que** des rouleaux du robot de soudage (3, 51) vont et viennent dans ou sur des rails de roulement (15, 16) ou qu'un chariot de guidage avec des rouleaux de roulement est en appui sur le système de rails.

20. Dispositif de guidage selon une ou plusieurs des revendications 1 à 19,
**caractérisé en ce que** le châssis de guidage (2, 31) est composé d'un système de rails à chariot de guidage qui est de forme rectiligne ou curviligne et qu'un déplacement des chariots de guidage a lieu par l'intermédiaire d'une crémaillère, d'une denture vissable ou d'une chaîne à rouleaux vissée avec des éléments rapportés et que le chariot de guidage est pourvu de son propre entraînement.

21. Dispositif de guidage selon l'une ou plusieurs des revendications 1 à 20,
**caractérisé en ce qu'**une fixation du châssis de guidage (2, 31) ou der consoles (5, 52, 71) a lieu sur les points fixes (22) existants des parois à revêtir, étant précisé que les points fixes (22) sont donnés par les boulons de fixation existants du revêtement intérieur (25) sur les parois intérieures (8).

22. Dispositif de guidage selon une ou plusieurs des revendications 1 à 21,
**caractérisé en ce que** les traverses (19) et traverses transversales (14, 17) sont au moins munies d'un trou oblong (21) pour la fixation du châssis de guidage (2, 31) de telle sorte qu'un meilleur positionnement du châssis de guidage (2, 31) est obtenu lors du montage, pour mieux aligner le robot de soudage (3, 51) par rapport au cordon de soudure.

23. Dispositif de guidage selon une ou plusieurs des revendications 1 à 22,
**caractérisé en ce que** le dispositif de palpage est composé d'un rouleau de guidage (24), d'un profilé en T ou d'une règle de guidage, qui, guidé(e) le long du lé en matière plastique à souder, est/sont prévu(s) pour le positionnement d'une tête de soudage.

24. Dispositif de guidage selon l'une ou plusieurs des revendications 1 à 23,
**caractérisé en ce que** le dispositif de palpage est composé de plusieurs capteurs optiques, par exemple des systèmes à laser qui autorisent un guidage hydraulique, pneumatique ou électrique de la tête de soudage.

25. Dispositif de guidage selon une ou plusieurs des revendications 1 à 24,
**caractérisé en ce que** la tête de soudage est mobile sur une distance de +/- 20 mm latéralement par rapport au positionnement fixe du robot de soudage (3, 51) à l'aide du dispositif de palpage.

26. Dispositif de guidage selon une ou plusieurs des revendications 1 à 25,
**caractérisé en ce que** le robot de soudage (3, 51) est équipé d'un laser ou d'un système à infrarouges pour l'exécution de soudures à lumière radiographique.

27. Dispositif de guidage selon l'une ou plusieurs des revendications 1 à 26,
**caractérisé en ce que** le robot de soudage (3, 51) peut être désaccouplé du châssis de guidage (2, 31) et démonté à l'aide d'un palan, d'une grue ou d'un engin similaire.

28. Dispositif de guidage selon une ou plusieurs des revendications 1 à 27,
**caractérisé en ce que** le châssis de guidage (2, 31) présente une tôle de guidage (23) chanfreinée.

29. Dispositif de guidage selon une ou plusieurs des revendications 1 à 28,
**caractérisé en ce que** le robot de soudage (3, 51) est équipé d'une caméra "WEB" à l'aide de laquelle il est procédé pendant l'opération au suivi, assisté par ordinateur, du guidage du cordon de soudure.

30. Dispositif de guidage selon une ou plusieurs des revendications 1 à 29,
**caractérisé en ce que** le bord du fil des lés en matière plastique est entouré ou/et supporté par un rouleau ou une tôle de guidage, par exemple en forme de T, de telle sorte que le lé en matière plastique est comprimable, avec des auxiliaires de soudage, un cours instant après le soudage à l'aide du robot de soudage (3, 51) et/ou d'un rouleau presseur supplémentaire.

31. Dispositif de guidage selon la revendication 30,
**caractérisé en ce que** les bords des films sont fixables pendant la durée du soudage par des aimants permanents déplaçables contre un rouleau ou une tôle de guidage.
